(19) Europäisches Patentamt
European Patent Office
Office européen des brevets

(11) Publication number: 0 069 475 B1

(12) EUROPEAN PATENT SPECIFICATION

(45) Date of publication of patent specification: 26.11.86

(51) Int. Cl.$^4$: C 08 G 69/44

(21) Application number: 82303002.8

(22) Date of filing: 10.06.82

# (54) Process for producing aliphatic copolyesteramide and tube moulded therefrom.

(30) Priority: 15.06.81 JP 90855/81
22.01.82 JP 7497/82

(43) Date of publication of application:
12.01.83 Bulletin 83/02

(45) Publication of the grant of the patent:
26.11.86 Bulletin 86/48

(84) Designated Contracting States:
DE FR GB

(56) References cited:
EP-A-0 042 008
FR-A-2 193 845
FR-A-2 325 674

CHEMICAL ABSTRACTS, vol. 86, no. 16, 18th April 1977, page 48, no. 107660t, Columbus, Ohio, US

(73) Proprietor: TORAY INDUSTRIES, INC.
2, Nihonbashi-Muromachi 2-chome Chuo-ku
Tokyo 103 (JP)

(72) Inventor: Chiba, Kazumasa
1-40, Shijo-cho Minami-ku
Nagoya-shi Aichi-ken (JP)
Inventor: Kobayashi, Kazuhiko
1-81, Ikegamidai Midori-ku
Nagoya-shi Aichi-ken (JP)
Inventor: Muraki, Toshio
3-79, Naruko-cho Midori-ku
Nagoya-shi Aichi-ken (JP)

(74) Representative: Ellis, John Clifford Holgate et al
MEWBURN ELLIS & CO. 2/3 Cursitor Street
London EC4A 1BQ (GB)

EP 0 069 475 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a process for producing an aliphatic copolyesteramide and tubes moulded from the same, the tubes having excellent flexibility, toughness, shapability, chemical resistance, heat resistance, hydrolysis resistance and fatigue resistance.

Recently, flexible thermoplastic such as plasticized polyvinylchloride, plasticized polyamide such as nylon 11 and nylon 12, polyurethane and polyetherester elastomer have been investigated to be moulded into tubes, pipes and hoses employed as various pressure hoses such as hydraulic hose and oil pressure hose, vacuum hoses and automobile parts such as fuel tubes and brake tubes. These tubes have the advantages that they do not need vulcanization, which is required for tubes moulded from natural rubber and synthetic rubber, and that they have excellent mouldability. However the above-mentioned materials have the following unsatisfactory problems respectively. That is, polyvinylchloride and polyurethane are inferior in heat resistance; polyurethane is inferior in hydrolysis resistance; polyetherester elastomer is inferior in chemical resistance; polyamide is inferior in flexibility and plasticized polyamide has a serious tendency to exude plasticizer.

It has now been found that aliphatic copolyesteramide comprising specified components can have low glass transition temperature and be formed into tubes having excellent flexibility, toughness, chemical resistance and hydrolysis resistance without addition of plasticizer. It has been known that aliphatic copolyesteramides can be prepared by polymerization of a mixture comprising diamines, dicarboxylic acids, polyhydric alcohols and/or aminocarboxylic acids or lactams in the presence of water under an internal pressure of above 14 bars in the first stage and under a reduced pressure in the second stage (for example in Published Unexamined Japanese Patent Application No. 45693/77).

However, a copolyesteramide having high viscosity and good qualities which are necessary to provide tubes exhibiting excellent shapability and mechanical properties, especially cold impact strength, cannot be obtained according to the above-described process. This is because inactivation of the catalyst by the existing water, as well as the high internal pressure in the first stage, prolongs the sum total of polymerization time, resulting in occurrence of degradation, such as partial thermal decomposition of the copolyesteramide.

The first object of the present invention is to provide a process for producing an aliphatic copolyesteramide having a high degree of polymerization.

The second object of the present invention is to provide a process for producing an aliphatic copolyesteramide which can be formed into various moulded articles and has excellent mechanical strength, flexibility, toughness, heat resistance, chemical resistance and the like.

The third object of the present invention is to provide tubes exhibiting excellent flexibility, toughness, shapability, chemical resistance, heat resistance, hydrolysis resistance and fatigue resistance without addition of any plasticizers, by moulding said aliphatic copolyesteramide.

According to the invention a process for producing an aliphatic copolyesteramide comprises heating a mixture comprising substantially

(A) from about 5 to 80 parts by weight of ester-forming components comprising
(α) at least one aliphatic diol having 2 to 6 carbon atoms and
(β) at least one aliphatic dicarboxylic acid having 9 to 12 carbon atoms and
(B) from about 95 to 20 parts by weight of at least one amide-forming component selected from
(a) aliphatic ω-amino carboxylic acids having 11 or 12 carbon atoms and
(b) mixtures (or, more preferably, equimolar salts) of
(α) at least one aliphatic diamine having 6 to 12 carbon atoms and
(β) at least one aliphatic dicarboxylic acid having 9 to 12 carbon atoms,

at a temperature of about 150 to 260°C, under substantially atmospheric pressure, in the presence of a catalyst and in the substantial absence of water, whereby catalytic esterification is carried out and subsequently heating the resulting esterified product at a temperature of about 200 to 300°C under a reduced pressure, whereby polycondensation occurs.

According to another aspect of the invention a tube moulded from aliphatic copolyesteramide comprises substantially (A) from about 5 to 50 percent by weight of ester units represented by the following general formula (I)

$$-\!\!\!\!+O(CH_2)_k-O-\underset{\underset{O}{\|}}{C}-(CH_2)_q-\underset{\underset{O}{\|}}{C}+\!\!\!\!- \qquad (I)$$

wherein k denotes an integer of 2 to 6 and q denotes an integer of 7 to 10, and

(B) from about 95 to 50 percent by weight of amide units selected from
(a) units represented by the following general formula (II),

$$-\!\!\!\!+HN-(CH_2)_m-\underset{\underset{O}{\|}}{C}+\!\!\!\!- \qquad (II)$$

wherein m denotes an integer of 10 or 11, and

(b) units represented by the following general formula (III)

$$\text{-}[\text{HN}-(\text{CH}_2)_n-\text{NH}-\underset{\underset{\text{O}}{\|}}{\text{C}}-(\text{CH}_2)_p-\underset{\underset{\text{O}}{\|}}{\text{C}}]\text{-} \qquad \text{(III)}$$

wherein n denotes an integer of 6 to 12 and p denotes an integer of 7 to 10.

A first, a process for producing an aliphatic copolyesteramide will be described.

As diols of ester-forming components, used as starting raw materials of the copolyesteramide, at least one aliphatic diol having 2 to 6 carbon atoms is employed. Representative examples of these aliphatic diols include ethyleneglycol, 1,3-propanediol, 1,4-butanediol and 1,6-hexanediol. Preferably 1,4-butanediol and 1,6-hexanediol are employed.

As aliphatic dicarboxylic acids of ester-forming components, used as starting raw materials of the copolyesteramide, at least one aliphatic dicarboxylic acid having 9 to 12 carbon atoms is employed. Rpresentative examples of these aliphatic dicarboxylic acids include azelaic acid, sebacic acnd and dodecanedioic acid. Preferably sebacic acid and dodecanedioic acid are employed.

Examples of aliphatic ω-aminocarboxylic acids used as starting raw materials of the copolyesteramide, include 11-aminoundecanoic acid and 12-aminododecanoic acid.

As aliphatic diamines of amide-forming components, used as starting raw materials of the copolyesteramide, at least one aliphatic diamine having 6 to 12 carbon atoms is employed. Representative examples of these aliphatic diamines include hexamethylenediamine, decamethylenediamine, undecamethylenediamine and dodecamethylenediamine. Preferably hexamethylenediamine and undecamethylenediamine are employed.

As aliphatic dicarboxylic acids of amide-forming components, used as starting raw materials of the copolyesteramide, at least one aliphatic dicarboxylic acid having 9 to 12 carbon atoms is employed. Representative examples of these aliphatic dicarboxylic acids include azelaic acid, sebacic acid, and dodecanedioic acid. Preferably sebacic acid and dodecanedioic acid are employed.

Commonly, amide-forming components comprising aliphatic diamines having 6 to 12 carbon atoms and aliphatic dicarboxylic acids having 9 to 12 carbon atoms, can be used in the form of a substantially equimolar salt.

The aliphatic copolyesteramide of the present invention may be optionally prepared in the presence of an additional small amount of other components, specifically

(A) ester-forming components such as neopentyl-glycol, cyclohexanedimethanol, terephthalic acid, isophthalic acid, naphthalenedicarboxylic acid, cyclohexanedicarboxylic acid, adipic acid, dimeric acid, trimesic acid, glycerin, pentaerythritol, ε-caprolactone and polycaprolactone, and

(B) amide-forming components such as ε-caprolactam, 6-aminocaproic acid, equimolar salt of hexamethylenediamine and adipic acid, equimolar salt of hexamethylenediamine and terephthalic acid, equimolar salt of hexamethylenediamine and isophthalic acid, equimolar salt of 2,2,4 - /2,4,4 - trimethylhexamethylendiamine and terephthalic acid, equimolar salt of hexamethylenediamine and trimesic acid and equimolar salt of 1,6,11-triaminoundecane and adipic acid. Aliphatic dicarboxylic acid dialkylesters may be also used as ester-forming components and amide-forming components.

A mixture comprising above-described ester-forming components and amide-forming components can be fed to an esterification reaction system and subsequent polycondensation reaction system. A mixture ratio of ester-forming components/amide-forming components is from about 5 to 80/about 95 to 20 parts, preferably from about 10 to 60/about 90 to 40 parts, more preferably from about 15 to 40/about 85 to 60 parts by weight. In case that amount of ester-forming components is not more than 5 parts by weight and the amount of amide-forming components is not less than 95 parts by weight, the moulded articles obtained from the copolyesteramide lack in flexibility. On the other hand, in case that the amount of ester-forming components is not less than 80 parts by weight and the amount of amide-forming components is not more than 20 parts by weight, the properties such as heat resistance and chemical resistance of the copolyesteramide and of the moulded articles obtained from it, are inferior.

The mixture of starting raw materials is first heated at temperatures of about 150 to 260°C, substantially under an atmospheric pressure, whereby they are esterified, and then heated at temperatures of about 200 to 300°C under a reduced pressure of below 10 Torr, preferably below 1 Torr, whereby they are polycondensed. The esterification and polycondensation can be carried out at the same temperature selected from a range of 200 to 280°C, but it is better than the temperature of the polycondensation stage is higher than that of the first esterification stage.

It is necessary that the esterification and polycondensation should be carried out in the presence of a catalyst in order to achieve a high degree of polymerization. In particular, the catalyst used in the esterification is effective through the esterification and polycondensation stages. The obtained aliphatic copolyesteramide with a high degree of polymerization in the presence of catalysts, can be formed into various tubes, pipes and hoses having excellent qualities.

Useful catalysts are titanium compounds, and especially tetraalkyltitanate such as tetrabutyltitanate, tetrapropyltitanate, tetraethyltitanate and tetramethyltitanate and alkalimetal titanium oxalate such as potassium titanate oxalate are preferably used. Tin compounds such as dibutyltin oxide and dibutyltin

laurate and lead compounds such as lead acetate may be also used as catalysts. These catalysts are effective for both reactions of esterification and polycondensation, and therefore the same catalysts can be used in both the above-mentioned reaction stages.

It is important in the present invention that the esterification and polycondensation should be carried out substantially in the absence of water. As above-described, the copolyesteramide of the present invention can be produced in the presence of catalysts in order to achieve sufficiently high viscosity to be moulded into tubes having excellent shapability and mechanical properties. Therefore, the amount of water in the reaction system must be kept as low as possible. Otherwise, on account of inactivation of catalysts caused by the presence of a large quantity of water, the sum total of polymerization time is prolonged, resulting in that a copolyesteramide having a high degree of polymerization and excellent quality cannot be obtained. The water produced by condensation should be distilled off immediately after production in the esterification and polycondensation stages.

It is important that the internal pressure of the reaction system is kept to substantially an atmospheric pressure in the first stage and a reduced pressure in the second stage. Under substantially an atmospheric pressure or a reduced pressure, inactivation of catalysts caused by the presence of water in the reaction system cannot substantially occur, since the produced water can be instantly removed from the reaction system. Especially, it is undesirable that in the first stage a mixture comprising ester-forming components and amide-forming components is polymerized in the presence of water under high pressure such as above 14 bars. That is, in the first and second stages, the reaction system should be maintained under substantially an atmospheric pressure or a reduced pressure, so that water may not remain present in the reaction system. Therefore, in the present invention, the term "substantially atmospheric pressure" may include a somewhat elevated pressure so long as the water is substantially absent in the reaction system. Somewhat elevated pressure prevents that volatilization of components such as diols and diamines causes molar-unbalance to suppress the degree of polymerization. However, in the first stage of the present invention, an atmospheric pressure is preferably employed. The esterification reaction is conducted under an oxygen-free protective gas such as nitrogen, in order to prevent side reactions and thermoxidative decomposition.

Aliphatic copolyesteramide thus obtained has a high degree of polymerization and low glass transition temperature and comprises substantially

(A) from about 5 to 50 percent by weight of ester units represented by the following general formula (I)

$$-\!\!\left[O(CH_2)_k-O-\underset{\underset{O}{\|}}{C}-(CH_2)_q-\underset{\underset{O}{\|}}{C}\right]\!\!- \qquad (I)$$

wherein k denotes an integer of 2 to 6 and q denotes an integer of 7 to 10, and

(B) from about 95 to 50 percent by weight of amide units selected from (a) units represented by the following general formula (II),

$$-\!\!\left[HN-(CH_2)_m-\underset{\underset{O}{\|}}{C}\right]\!\!- \qquad (II)$$

wherein m denotes an integer of 10 or 11, and

(b) units represented by the following general formula (III)

$$-\!\!\left[HN-(CH_2)_n-NH-\underset{\underset{O}{\|}}{C}-(CH_2)_p-\underset{\underset{O}{\|}}{C}\right]\!\!- \qquad (III)$$

wherein n denotes an integer of 6 to 12 and p denotes an integer of 7 to 10.

The copolyesteramide of the present invention is a random copolymer having almost statistical distribution of ester units and amide units. The degree of polymerization of the copolyesteramide is not defined and generally, the relative viscosity, which is measured at 25°C in orthochlorophenol at a concentration of 0.5 percent, can be varied from 1.4 to 4.0 according to the final use at will. In particular, the copolyesteramide having a relative viscosity of 1.5 to 3.0 and comprising substantially from about 5 to 50 percent by weight of ester units represented by said formula (I) and from about 95 to 50 percent by weight of amide units selected from units represented by said formula (II) and units represented by said formula (III), is suitable in practice for moulding of tubes.

A copolyesteramide having extremely high viscosity may be obtained by solid-state polymerization, or by mixing with other reactive compounds after melt-polymerization. These methods can enhance melt-viscosity and melt-tension, resulting in getting tubes which have more excellent mouldability and mechanical properties.

The melting point of the copolyesteramide is not defined. However, for the purpose of keeping the shape of tubes at high circumambient temperatures, copolyesteramide having a melting point of above 140°C is used in practice for moulding of tubes.

The aliphatic copolyesteramide of the present invention has inherent excellent heat resistance and weather resistance, but in some cases when it is used for various industrial parts which require further stability, the copolyesteramide may contain well-known additives such as heat stabilizers, antioxidants, light stabilizers, ultra violet absorbents and so on in the amount of about 0.005 to 3.0 percent by weight based on the polymer, before, during or after the polymerization. The copolyesteramide of the present invention may also optionally contain other additives such as pigments, dyes, flame retarding agents, lubricants, mould-releasing agents , nucleating agents, antistatic agents, hydrolysis resistant agents, reinforcing agents, plasticizers and other polymer materials in moderate amount without greatly changing the essential characteristics of the copolyesteramide of the present invention.

The copolyesteramide of the present invention can be formed into a wide range of useful articles by means of conventional moulding methods employed in the fabrication of thermoplastics. Especially, machinery parts and automobile parts obtained by injection or extrusion moulding are useful in practice. The extrusion moulding process and conditions of formation of tubes are not particularly defined and conventional methods can be employed. Thus, for example, the aliphatic copolyesteramide may be heated to the molten-state using an extruder and the tubular extrudate through the die is quenched by the forming apparatus to give tubes having the desired diameter and wall-thickness. In the above-described moulding process of tubes, a calibration method such as the internal air-pressure technique or vacuum calibration technique, adjustment of cooling temperature and length of cooling bath and improvement lubrication of tube to the inside surface of the apparatus can be adopted in order to get uniform tubes.

The obtained tube may have known optional structures such as a one layer structure and poly layer structures combined with other polymers and the like.

Thus-obtained tubes of the present invention can exhibit excellent flexibility which is characterised by low minimum bend radius, high modulus at relatively high temperatures and sufficient flexibility at relatively low temperatures, shapability, heat resistance, chemical resistance, hydrolysis resistance and toughness, without addition of any plasticizers.

In other words, the tubes of the present invention have the following advantages.

(1) The tubes can exhibit excellent flexibility and toughness over a wide range of from relatively high circum-ambient temperatures to low temperatures, since the tube is obtained from the copolyesteramide comprising aliphatic components that has a lower glass transition temperature than room temperature.

(2) The aliphatic copolyesteramide of the present invention shows remarkable avoidance of deterioration of crystallinity, almost independent of the composition of components. Therefore, excellent mouldability can be obtained, that is, for example, the suppression of sticking of the tubular extrudate against sizing plate or cooling sleeve, and the rapid solidification of the molten tube in the cooling bath. Moreover, on account of such excellent mouldability, good uniform wall-thickness and strict diameter of tubes can be achieved.

The invention will be more clearly understood with reference to the following Examples.

Copolyesteramide and moulded tubes described in the following Examples and Comparative Examples, were characterized as follows:

(1) Relative viscosities were measured at 25°C in orthochlorophenol at a concentration of 0.5 gram/100 millilters.

(2) Melting point and glass transition temperature were determined using a differential scanning calorimeter (Perkin Elmer Co. DSC-1B) operating at a scan speed of 20°C/minute.

(3) Tensile properties: ASTM D638

(4) Flexural properties: ASTM D790

(5) Izod impact strength: ASTM D256

(6) Fatique resistance was determined as folding counts to fracture of specimen, which was formed by a compression moulding method and which had a width of 5 millimeters, a length of 80 millimeters and a thickness of 1 millimeter; the sample was folded through a folding angle of 270°, at a frequency of 200 cycles/minute under a load of 1.0 kilogram/centimeter$^2$.

(7) Cold temperature impact strength of tube was determined as failure percentage of tubes when a falling weight of 5.53 kilograms was applied from height of 1 meter on tubes exposed to the determined temperature.

(8) Resistance of tube to oil was determined as elongation change to initial value after immersion in ASTM No. 3 oil for 20 days at 120°C.

(9) Resistance of tube to zinc chloride was determined as observation of cracks after immersion in a 50 percent aqueous solution of zinc chloride for 200 hours at 23°C in a state of bending to the minimum bend radius.

Example 1

A mixture of 74.4 parts by weight of 11-amino-undecanoic acid, 18.0 parts by weight of dodecanedioc acid and 12.6 parts by weight of 1,4-butanediol was introduced into the reaction vessel together with 0.1 part by weight of tetrabutyltitanate and 0.2 parts by weight of "Irganox" 1010 (which is the trade mark for tetrakis[methylene(3,5-di-tert-butyl-4-hydroxy-hydrocinnamate)] methane produced by Ciba Geigy Limited). After the replacement of air in the vessel by nitrogen the mixture was heated to 230°C in 2.5 hours with stirring under nitrogen at atmospheric pressure. The esterification reaction was continued for 1 hour

at the same temperature, while a mixture of by-produced water, tetrahydrofuran and excess 1,4-butanediol was distilled off. Then the reaction mixture was transferred to the polycondensation reaction equipped with a vacuum line. The internal pressure was gradually reduced to 0.1 Torr in 1 hour simultaneously with the temperature being raised up to 245°C. The polycondensation reaction was continued under these conditions for 1.8 hours to give a clear melt of copolymer. The copolymer was then discharged, water quenched and granulated. The copolyesteramide thus obtained consisted of 75 percent by weight of undecaneamide (N-11) units and 25 percent by weight of butylenedodecadioate (PBD) units. Relative viscosity of this copolyesteramide was 1.72. Melting point and glass transition temperature were 155°C and −2°C, respectively.

The granules of this copolyesteramide were dried in vacuo and injection moulded at a cylinder temperature of 185°C and a mould temperature of 60°C, to give test-pieces designated by ASTM. Mechanical properties of these test-pieces were measured and the results are summarized in Table 1. This copolyesteramide provded to have excellent flexibility, impact strength, fatigue resistance and other good mechanical properties.

Comparative example 1

The same procedure as Example 1 was repeated except that 10.0 parts by weight of water were added together with other monomer components in the esterification stage. In this case, tetrabutyltitanate as catalyst was inactivated by water and the reaction was extremely suppressed. Even after 5 hours of the succeeding polycondensation reaction in a similar procedure to Example 1, relative viscosity of the obtained copolyesteramide was only 1.36—not sufficiently high for the moulding of tubes.

Example 2

A mixture of 78.9 parts by weight of 12-amino-dodecanoic acid, 10.0 parts by weight of sebacic acid and 8.1 parts by weight of 1,4-butanediol were polymerized by catalytic esterification and succeeding polycondensation reaction in a similar procedure to Example 1. After 2.0 hours of polycondensation, an aliphatic copolyesteramide consisting of 85 percent by weight of dodecaneamide (N-12) units and 15 percent by weight of butylenesebacate (PBS) units was obtained. Physical and mechanical properties of this copolyesteramide are summarized in Table 1.

Example 3

A mixture of 63.4 parts by weight of hexamethylenediammonium sebacate, 26.6 parts by weight of sebacic acid and 17.3 parts by weight of 1,6-hexanediol was esterified and thereafter polycondensed according to the procedure described in Example 1. After 2.2 hours of polycondensation reaction, an aliphatic copolyesteramide consisting of 60 percent by weight of hexamethylenesebacamide (N-610) units and 40 percent by weight of hexamethylenesebacate (PHS) units was obtained. Physical and mechanical properties of this copolyesteramide are summarized in Table 1.

Example 4

A mixture of 68.8 parts by weight of 12-amino-dodecanoic acid, 19.9 parts by weight of dodecanedioic acid, 11.3 parts by weight of 1,6-hexanediol and 0.10 parts by weight of tetrabutyltitanate was introduced into the reactor and the catalytic esterification reaction was carried out in the same way as described in Example 1. Then 0.02 parts by weight of tetrabutyltitanate was added to the reaction mixture and the mixture was subjected to the succeeding polycondensation process under a reduced pressure of 0.1 Torr. After 2.0 hours of polycondensation reaction, copolyesteramide consisting of 70 percent by weight of dodecaneamide (N-12) units and 30 percent by weight of hexamethylenedodecadioate (PHD) units was obtained. Physical and mechanical properties of this copolyesteramide are summarized in Table 1.

TABLE 1

| | | | Example 1 | Example 2 | Example 3 | Example 4 |
|---|---|---|---|---|---|---|
| Copolyesteramide | | wt% | N-11/PBD :75/25 | N-12/PBS :85/15 | N-610/PHS :60/40 | N-12/PHD :70/30 |
| relative viscosity | | — | 1.72 | 1.61 | 1.60 | 1.62 |
| Melting point | | °C | 155 | 164 | 135 | 150 |
| Glass transition temperature | | " | −2 | 2 | 0 | −4 |
| Tensile strength at yield (23°C) | | $kg/cm^2$ | 180 | 200 | 190 | 170 |
| Flexural strength at yield (23°C) | | " | 220 | 250 | 230 | 180 |
| Flexural modulus | (23°C) | " | 4,500 | 5,200 | 4,200 | 2,900 |
| | (−20°C) | " | 12,000 | 12,500 | 12,000 | 11,500 |
| | (−40°C) | " | 14,900 | 15,200 | 14,800 | 14,000 |
| Izod impact | (23°C) | kg·cm/cm·notch | 50 | 48 | 42 | Non break |
| strength | (−20°C) | " | 20 | 20 | 19 | 25 |
| Fatigue resistance (23°C) | | counts | >10,000 | >10,000 | >10,000 | >10,000 |

Comparative example 2

The same procedure as Example 4 was repeated except 7.5 parts by weight of water was added together with other monomer components in the esterification stage. Then 0.02 parts by weight of tetrabutyltitanate was added to the reaction mixture and the succeeding polycondensation was carried out in the similar way to Example 4. After the polycondensation reaction was continued for 2.0 hours which is the same period as in Example 4, copolyesteramide was discharged. Relative viscosity of thus-obtained copolyesteramide was 1.30, being lower than that of Example 4.

Example 5

The aliphatic copolyesteramide obtained in Example 1 was dried in vacuo and using the 45 millimeters Φ extruder which has L/D of 23, was heated at 200°C to yield a tubular extrudate. Calibration of the tube was carried out by means of vacuum calibration technique while the temperature of the cooling water was kept at 12°C to give a tube with outside and inside diameter of 8 millimeters and 6 millimeters respectively. With this moulding process, good lubrication between the tube and the internal surface of the calibrator and rapid solidification of the tube in the cooling bath could be achieved, resulting in the obtained tube having excellent uniform wall thickness. Mechanical properties of this tube were measured and the results are summarized in Table 2. The tube thus obtained proved to have high impact strength and excellent flexibility even at low temperatures.

Comparative example 3

Flexural modulus of polyundecaneamide obtained by melt-polymerization of 11-aminoundecanoic acid was 12,000 kilograms/centimeter$^2$ at 23°C, higher than that of the aliphatic copolyesteramide in Example 1. Therefore, the tube obtained by moulding of polyundecaneamide had in sufficient flexibility.

Comparative example 4

A copolyesteramide consisting of 40 percent by weight of undecaneamide units and 60 percent by weight of butylenedodecadioate was moulded into tube in a similar procedure to Example 5. However, melting point of the copolyesteramide described in this example was as low as 103°C and so the tube had poor heat resistance.

Examples 6 and 7

The aliphatic copolyesteramides obtained in Examples 2 and 4 were moulded into tubes, using the same procedure as described in Example 5. Mechanical properties of these tubes are summarized in Table 2.

Examples 8 to 10.

By the method described in Example 1, but varying the kind and amount of the components, aliphatic copolyesteramides were prepared, and tubes moulded in the same procedure as Example 5. Physical and mechanical properties of these tubes are summarized in Table 3.

TABLE 2

| | | | Example 5 | Example 6 | Example 7 |
|---|---|---|---|---|---|
| Copolyesteramide | | wt% | N-11/PBD :75/25 | N-12/PBS :85/15 | N-12/PHD :70/30 |
| Cold temperature impact strength (Failure percentage) | | | | | |
| | (23°C) | % | 0 | 0 | 0 |
| | (0°C) | % | 0 | 0 | 0 |
| | (−40°C) | % | 10 | 15 | 5 |
| | (−60°C) | % | 15 | 20 | 10 |
| Resistance to oil (Elongation change) | | % | 5 | 3 | 7 |
| Resistance to zinc chloride (Existence of cracks) | | | None | None | None |

TABLE 3

| | | | Example 8 | Example 9 | Example 10 |
|---|---|---|---|---|---|
| Copolyesteramide | | wt% | N-11/PBD :70/30 | N-12/PBS :75/25 | N-612/PHS :65/35 |
| Relative viscosity | | — | 1.68 | 1.57 | 1.72 |
| Melting point | | °C | 154 | 147 | 150 |
| Glass transition temperature | | " | −4 | −5 | 0 |
| Cold temperature impact strength (Failure precentage) | | | | | |
| | (23°C) | % | 0 | 0 | 0 |
| | (0°C) | " | 0 | 0 | 0 |
| | (−40°C) | " | 5 | 10 | 10 |
| | (−60°C) | " | 15 | 15 | 20 |
| Resistance to oil (Elongation change) | | " | 5 | 5 | 5 |
| Resistance to zinc chloride (Existence of cracks) | | | None | None | None |

**Claims**

1. A process for producing an aliphatic copolyesteramide which comprises heating a mixture comprising substantially

(A) from 5 to 80 parts by weight of ester-forming components comprising
(α) at least one aliphatic diol having 2 to 6 carbon atoms and
(β) at least one aliphatic dicarboxylic acid having 9 to 12 carbons atoms and

(B) from 95 to 20 parts by weight of at least one amide-forming component selected from
(a) aliphatic ω-aminocarboxylic acids having 11 or 12 carbon atoms and
(b) equimolar salts (or mixtures) of
(α) at least one aliphatic diamine having 6 to 12 carbon atoms and
(β) at least one aliphatic dicarboxylic acid having 9 to 12 carbon atoms,

at a temperature of 150 to 260°C, under substantially atmospheric pressure, in the presence of a catalyst and in the substantial absence of water, whereby catalytic esterification is carried out and subsequently heating the resulting esterified product at a temperature of 200 to 300°C under a reduced pressure, whereby polycondensation occurs.

2. A process according to claim 1 wherein said aliphatic copolyesteramide comprises substantially (A) from 10 to 60 parts by weight of ester-forming components and (B) from 90 to 40 parts by weight of amide-forming component or components.

3. A process according to claim 2 wherein said aliphatic copolyesteramide comprises substantially from 15 to 40 parts by weight of ester-forming components and from 85 to 60 parts by weight of amide-forming component or components.

4. A process according to any preceding claim, wherein said aliphatic diol is 1,4-butanediol and/or 1,6-hexanediol.

5. A process according to any preceding claim wherein said aliphatic dicarboxylic acid used as ester-forming component is sebacic acid and/or dodecanedioic acid.

6. A process according to any preceding claim wherein said aliphatic ω-aminocarboxylic acid is 11-aminoundecanoic acid and/or 12-aminododecanoic acid.

7. A process according to any preceding claim wherein said aliphatic diamine is hexamethylenediamine and/or undecamethylenediamine.

8. A process according to any preceding claim wherein said aliphatic dicarboxylic acid of the amide-forming component is sebacic acid and/or dodecanedioic acid.

9. A process according to any one of claims 1 to 3, wherein said aliphatic diol is 1,4-butanediol and/or 1,6-hexanediol, said aliphatic dicarboxylic acid used as ester-forming component is sebacic acid and/or dodecanedioic acid, and said amide-forming component is 11-aminoundecanoic acid and/or 12-aminododecanoic acid.

10. A process according to any one of claims 1 to 3, wherein said aliphatic diol is 1,4-butanediol and/or 1,6-hexanediol, said aliphatic dicarboxylic acid used as ester-forming component is sebacic acid and/or dodecanedioic acid, and said amide-forming component is an equimolar salt of hexamethylenediamine and/or undecamethylenediamine, with sebacic acid and/or dodecanedioc acid.

11. A process according to any preceding claim wherein said catalyst is a titanium compound.

12. A process acccording to claim 11 wherein said titanium compound is selected from tetraalkyltitanates and alkalimetal titanium oxalates.

13. A process according to claim 12 wherein said tetraalkyltitanate is selected from tetramethyltitanate, tetraethyltitanate, tetrapropyltitanate and tetrabutyltitanate.

14. A tube moulded from aliphatic copolyesteramide having a relative viscosity of 1,5 to 3 measured at 25°C in orthochlorophenol at a concentration of 0,5% comprising substantially (A) from 5 to 50 percent by weight of ester units represented by the following general formula (I)

$$\left[ O(CH_2)_k - O - \underset{\underset{O}{\|}}{C} - (CH_2)_q - \underset{\underset{O}{\|}}{C} \right] \qquad (I)$$

wherein k denotes an integer of 2 to 6 and q denotes an integer of 7 to 10, and

(B) from 95 to 50 percent by weight of amide units selected from (a) units represented by the following general formula (II),

$$\left[ HN - (CH_2)_m - \underset{\underset{O}{\|}}{C} \right] \qquad (II)$$

wherein m denotes an integer of 10 or 11, and

(b) units represented by the following general formula (III)

$$\left[ HN-(CH_2)_n-NH-\underset{\underset{O}{\|}}{C}-(CH_2)_p-\underset{\underset{O}{\|}}{C} \right] \qquad (III)$$

wherein n denotes an integer of 6 to 12 and p denotes an integer of 7 to 10.

15. A tube according to claim 14 wherein k in said formula (I) is selected from the integers 4 and 6.

16. A tube according to claim 14 or claim 15, wherein q in said formula (I) is selected from the integers 8 and 10.

17. A tube according to any one of claims 14 to 16 wherein n in said formula (III) is selected from the integers 6 and 11.

18. A tube according to any one of claims 14 to 17 wherein p in said formula (III) is selected from the integers 8 and 10.

19. A tube according to claim 14 wherein said ester units are represented by said formula (I) in which k is selected from integers 4 and 6 and in which q is selected from the integers 8 and 10, and said amide units are represented by said formula (II).

20. A tube according to claim 19 wherein said aliphatic copolyesteramide comprises substantially from 15 to 40 percent by weight of said ester units and from 85 to 60 percent by weight of said amide units.

21. A tube according to claim 14 wherein said ester units are represented by said formula (I) in which k is selected from the integers 4 and 6 and in which q is selected from the integers 8 and 10, and said amide units are represented by said formula (III) in which n is selected from the integers 6 and 11 and p is selected from the integers 8 and 10.

**Patentansprüche**

1. Verfahren zum Herstellen eines aliphatischen Copolyesteramids durch Erhitzen einer Mischung, die im wesentlichen folgende Bestandteile umfaßt:

(A) 5 bis 80 Gewichtsteile esterbildender Komponenten, umfassend
(α) mindestens ein aliphatisches Diol mit 2 bis 6 Kohlenstoffatomen und
(β) mindestens eine aliphatischen Dicarbonsäure mit 9 bis 12 Kohlenstoffatomen und

(B) 95 bis 20 Gewichtsteile mindestens einer amidbildenden Komponente, ausgewählt aus
(a) aliphatischen ω-Aminocarbonsäuren mit 11 oder 12 Kohlenstoffatomen und
(b) äquimolaren Salzen (oder Mischungen) von
(α) mindestens einem aliphatischen Diamin mit 6 bis 12 Kohlenstoffatomen und
(β) mindestens einer aliphatischen Dicarbonsäure mit 9 bis 12 Kohlenstoffatomen,

bei einer Temperatur von 150 bis 260°C, unter im wesentlichen atmosphärischem Druck in Gegenwart eines Katalysators, wobei Wasser im wesentlichen abwesend ist, wobei die katalytische Veresterung ausgeführt wird und man nachfolgend das erhaltene veresterte Produkt bei einer Temperatur von 200 bis 300°C unter einem verminderten Druck erhitzt, wobei die Polykondensation stattfindet.

2. Verfahren nach Anspruch 1, wobei das aliphatische Copolyerstamid im wesentlichen umfaßt:
(A) 10 bis 60 Gewichtsteile esterbildender Komponenten und
(B) 90 bis 40 Gewichtsteile amidbildender Komponente oder Komponenten.

3. Verfahren nach Anspruch 2, wobei das aliphatische Copolyesteramid im wesentlichen 15 bis 40 Gewichtsteile esterbildender Komponenten und 85 bis 60 Gewichtsteile amidbildender Komponente oder Komponenten umfaßt.

4. Verfahren nach irgendeinem der vorhergehenden Ansprüche, wobei das aliphatische Diol 1,4-Butandiol und/oder 1,6-Hexandiol ist.

5. Verfahren nach irgendeinem vorhergehenden Anspruch, wobei die als esterbildende Komponente benutzte aliphatische Dicarbonsäure Sebacin- und/oder Dodecandicarbonsäure ist.

6. Verfahren nach irgendeinem Anspruch, bei dem die aliphatische ω-Aminocarbonsäure 11-Aminoundecancarbonsäure und/oder 12-Aminododecancarbonsäure ist.

7. Verfahren nach irgendeinem vorhergehenden Anspruch, bei dem das aliphatische Diamin Hexamethylendiamin und/oder Undecamethylendiamin ist.

8. Verfahren nach irgendeinem vorhergehenden Anspruch, bei dem die aliphatische Dicarbonsäure der amidbildenden Komponente Sebacinsäure und/oder Dodecandicarbonsäure ist.

9. Verfahren nach irgendeinem der Ansprüche 1 bis 3, bei dem das aliphatische Diol 1,4-Butandiol und/oder 1,6-Hexandiol ist, die aliphatische Dicarbonsäure, die als esterbildende Komponente eingesetzt wird, Sebacin- und/oder Dodecandicarbonsäure ist und die amidbildende Komponente 11-Aminoundecancarbonsäure und/oder 12-Aminododecancarbonsäure ist.

10. Verfahren nach irgendeinem der Ansprüche 1 bis 3, bei dem das aliphatische Diol 1,4-Butandiol und/oder 1,4-Hexandiol ist, die als esterbildende Komponente benutzte aliphatische Dicarbonsäure Sebacin- und/oder Dodecandicarbonsäure ist und die amidbildende Komponente ein äquimolares Salz von

Hexamethylendiamin und/oder Undecamethylendiamin mit Sebacinsäure und/oder Dodecandicarbonsäure ist.

11. Verfahren nach irgendeinem vorhergehenden Anspruch, bei dem der Katalysator eine Titanverbindung ist.

12. Verfahren nach Anspruch 11, bei dem die Titanverbindung ausgewählt ist aus Tetraalkyltitanaten und Alkalimetalltitanoxalaten.

13. Verfahren nach Anspruch 12, bei dem das Tetraalkyltitanat ausgewählt ist aus Tetramethyltitanat, Tetraethyltitanat, Tetrapropyltitanat und Tetrabutyltitanat.

14. Ein aus aliphatischem Copolyesteramid mit einer relativen Viskosität von 1,5 bis 3, gemessen bei einer Konzentration von 0,5% bei 25°C in o-Chlorophenol, geformtes Rohr, umfassend im wesentlichen:

(A) 5 bis 50 Gew.-% Estereinheiten, die durch die folgende allgemeine Formel (I) repräsentiert sind

$$\left[ (CH_2)_k - O - \underset{\underset{O}{\|}}{C} - (CH_2)_q - \underset{\underset{O}{\|}}{C} \right] \qquad (I)$$

worin k eine ganze Zahl von 2 bis 6 und q eine ganze Zahl von 7 bis 10 ist und

(B) 95 bis 50 Gew.-% Amideinheiten ausgewählt aus

(a) Einheiten, die durch die folgende allgemeine Formel (II) repräsentiert werden

$$\left[ HN - (CH_2)_m - \underset{\underset{O}{\|}}{C} \right] \qquad (II)$$

worin m den Wert 10 oder 11 hat und

(b) Einheiten, die durch die folgende allgemeine Formel (III) repräsentiert sind

$$\left[ HN - (CH_2)_n - NH - \underset{\underset{O}{\|}}{C} - (CH_2)_p - \underset{\underset{O}{\|}}{C} \right] \qquad (III)$$

worin n eine ganze Zahl von 6 bis 12 und p eine ganze Zahl von 7 bis 10 bedeutet.

15. Rohr nach Anspruch 14, worin k in Formel (I) ausgewählt ist aus den ganzen Zahlen 4 und 6.

16. Rohr nach Anspruch 14 oder 15, worin q in Formel (I) ausgewählt ist aus den ganzen Zahlen 8 und 10.

17. Rohr nach irgendeinem der Ansprüche 14 bis 16, worin n in der Formel (III) ausgewählt ist aus den ganzen Zahlen 6 und 11.

18. Rohr nach irgendeinem der Ansprüche 14 bis 17, worin p in Formel (III) ausgewählt ist aus den ganzen Zahlen 8 und 10.

19. Rohr nach Anspruch 14, worin die Estereinheiten durch die Formel (I) repräsentiert sind, worin k ausgewählt ist aus den ganzen Zahlen 4 und 6 und worin q ausgewählt ist aus den ganzen Zahlen 8 und 10 und wobei die Amideinheiten repräsentiert sind durch die Formel (II).

20. Rohr nach Anspruch 19, worin das aliphatische Copolyesteramid im wesentlichen 15 bis 40 Gew.-% der Estereinheiten und 85 bis 60 Gew.-% der Amideinheiten umfaßt.

21. Rohr nach Anspruch 14, worin die Estereinheiten durch die Formel (I) repräsentiert sind, in der k ausgewählt ist aus den ganzen Zahlen 4 und 6 und in der q ausgewählt ist aus den ganzen Zahlen 8 und 10, und die Amideinheiten sind durch die Formel (III) repräsentiert, worin n ausgewählt ist aus den ganzen Zahlen 6 und 11 und q ausgewählt ist aus den ganzen Zahlen 8 und 10.

**Revendications**

1. Procédé de production d'un copolyesteramide aliphatique qui consiste à chauffer un mélange comprenant sensiblement

(A) de 5 à 80 parties de poids de composants formant un ester comprenant

(α) au moins un diol aliphatique ayant 2 à 6 atomes de carbone et

(β) au moins un acide dicarboxylique aliphatique ayant 9 à 12 atomes de carbone et

(B) de 95 à 20 parties en poids d'au moins un composant formant un amide choisi parmi

(a) des acides ω-aminocarboxyliques aliphatiques ayant 11 ou 12 atomes de carbone et

(b) des sels équimolaires (ou leurs mélanges) de

(α) au moins une diamine aliphatique ayant 6 à 12 atomes de carbone et

(β) au moins un acide dicarboxylique aliphatique ayant 9 à 12 atomes de carbone,

à une température de 150 à 260°C, à une pression sensiblement atmosphérique, en présence d'un catalyseur et en l'absence sensible d'eau, pour qu'ainsi l'estérification catalytique soit effectuée et à chauffer subséquemment le produit estérifié résultant à une température de 200 à 300°C sous une pression réduite, pour qu'ainsi une polycondensation se produise.

2. Procédé selon la revendication 1 où ledit copolyesteramide aliphatique comprend sensiblement (A) de 10 à 60 parties en poids de composants formant un ester et (B) de 90 à 40 parties en poids d'un composant ou de composants formant un amide.

3. Procédé selon la revendication 2 où ledit copolyesteramide aliphatique comprend sensiblement de 15 à 40 parties en poids de composants formant un ester et de 85 à 60 parties en poids d'un composant ou de composants formant un amide.

4. Procédé l'une quelconque des revendications précédentes où ledit diol aliphatique est le 1,4-butanediol et/ou le 1,6-hexanediol.

5. Procédé selon l'une quelconque des revendications précédentes où ledit acide dicarboxylique aliphatique utilisé comme composant formant un ester est l'acide sébacique et/ou l'acide dodecanedioïque.

6. Procédé selon l'une quelconque des revendications précédentes où ledit acide ω-aminocarboxylique aliphatique est l'acide 11-aminoundécanoïque et/ou l'acide 12-amino-dodécanoïque.

7. Procédé selon l'une quelconque des revendications précédentes où ladite diamine aliphatique est l'hexaméthylènediamine et/ou l'undécaméthylènediamine.

8. Procédé selon l'une quelconque des revendications précédentes où ledit acide dicarboxylique aliphatique du composant formant un amide est l'acide sébacique et/ou l'acide dodécanedioïque.

9. Procédé selon l'une quelconque des revendications 1 à 3 où ledit diol aliphatique est le 1,4-butanediol et/ou le 1,6-hexanediol, ledit acide dicarboxylique aliphatique utilisé comme composant formant l'ester est l'acide sébacique et/ou l'acide dodécanedioïque et ledit composant formant un amide est l'acide 11-aminoundécanoïque et/ou l'acide 12-aminododécanoïque.

10. Procédé selon l'une quelconque des revendications 1 à 3 où ledit diol aliphatique est le 1,4-butanediol et/ou le 1,6-hexanediol, ledit acide dicarboxylique aliphatique utilisé comme composant formant un ester est l'acide sébacique et/ou l'acide dodécanedioïque et ledit composant formant un amide est un sel équimolaire d'hexaméthylènediamine et/ou d'undécaméthylènediamine, avec l'acide sébacique et/ou l'acide dodécanedioïque.

11. Procédé selon l'une quelconque des revendications précédentes où ledit catalyseur est un composé de titane.

12. Procédé selon la revendication 11 où ledit composé de titane est choisi parmi des tétraalkyltitanates et oxalates de titane d'un métal alcalin.

13. Procédé selon la revendication 12 où ledit tétraalkyltitanate est choisi parmi le tétraméthylltitanate, le tétraéthyltitanate, le tétrapropyltitanate et le tétrabutyltitanate.

14. Tube moulé d'un copolyesteramide aliphatique ayant une viscosité relative de 1,5 à 3 mesurée à 25°C dans l'orthochlorophénol à une concentration de 0,5 % comprenant sensiblement (A) de 5 à 50 pour cent en poids d'unités d'ester représentées par la formule générale suivante (I)

$$\left[O(CH_2)_k-O-\underset{\underset{O}{\|}}{C}-(CH_2)_q-\underset{\underset{O}{\|}}{C}\right] \qquad (I)$$

où k désigne un nombre entier de 2 à 6 et q désigne un nombre entier de 7 à 10, et

(B) de 95 à 50 pour cent en poids d'unités d'amide choisies parmi (a) des unités représentées par la formule générale suivante (II)

$$\left[HN-(CH_2)_m-\underset{\underset{O}{\|}}{C}\right] \qquad (II)$$

où m désigne un nombre entier de 10 ou 11, et

(b) des unités représentées par la formule générale (III) suivante

$$\left[NH-(CH_2)_n-NH-\underset{\underset{O}{\|}}{C}-(CH_2)_p-\underset{\underset{O}{\|}}{C}\right] \qquad (III)$$

où n désigne un nombre entier de 6 à 12 et p désigne un nombre entier de 7 à 10.

15. Tube selon la revendication 14 où k dans ladite formule (I) est choisi parmi les nombres entiers 4 et 6.

16. Tube selon la revendication 14 ou la revendication 15 où q dans ladite formule (I) est choisi parmi les nombres entiers 8 et 10.

17. Tube selon l'une quelconque des revendications 14 à 16 où n dans ladite formule (III) est choisi parmi les nombres entiers 6 et 11.

18. Tube selon l'une quelconque des revendications 14 à 17 où p dans ladite formule (III) est choisi parmi les nombres entiers 8 et 10.

19. Tube selon la revendication 4 où lesdites unités d'ester sont représentées par ladite formule (I) où k est choisi parmi les nombres entiers 4 et 6 et où q est choisi parmi les nombres entiers 8 et 10, et lesdites unités d'amide sont représentées par ladite formule (II).

20. Tube selon la revendication 19 où ledit copolyesteramide aliphatique comprend sensiblement de 15 à 40 pour cent en poids desdites unités d'ester et de 85 à 60 pour cent en poids desdites unités d'amide.

21. Tube selon la revendication 14 où lesdites unités d'ester sont représentées par ladite formule (I) où k est choisi parmi les nombres entiers 4 et 6 et où q est choisi parmi les nombres entiers 8 et 10, et lesdites unités d'amide sont représentées par ladite formule (III) où n est choisi parmi les nombres entiers 6 et 11 et p est choisi parmi les nombres entiers 8 et 10.